# EUROPEAN PATENT APPLICATION

(11) **EP 2 442 325 A2**
(43) Date of publication of application: **18.04.2012**
(21) Application number: 11184050.0
(22) Date of filing: 05.10.2011
(51) Int. Cl.: H01G 9/20

(54) **Flexible quantum dot sensitized solar cells**

(30) Priority: 12.10.2010 US 902705
(71) Applicant: Honeywell International Inc., Morristown, NJ 07962-2245 (US)
(72) Inventor: Wang, Marilyn, Morristown, NJ New Jersey 07962-2245 (US); Zhao, Linan, Morristown, NJ New Jersey 07962-2245 (US); Zheng, Zhi, Morristown, NJ New Jersey 07962-2245 (US); Liu, Anna, Morristown, NJ New Jersey 07962-2245 (US)
(74) Representative: Buckley, Guy Julian

(57) **Abstract**

A flexible solar cell is assembled by forming a TiO₂ patterned layer on a flexible substrate electrode. Quantum dots (QDs) are formed on the TiO₂ patterned layer. A gasket is disposed between the flexible substrate electrode and a flexible counter electrode forming a sandwich. Electrolyte and sealant are injected between the substrate electrode and flexible counter electrode to form the flexible solar cell.

## Description

### Field of the Invention

This invention relates to a method of preparing CdSe quantum dot sensitizers for flexible solar cells on a substrate and to flexible solar cells prepared on flexible substrates.

### Background

Investigation of lightweight and flexible solar cells is important because of their advantages for transportation and photovoltaic power-supply systems equipment. New designs and applications for supplying mobile electricity for lap-top computers, mobile phones, watches, etc. are possible.

### Summary

A method for preparing flexible solar cells comprises forming a titanium dioxide (TiO₂) patterned layer on a flexible substrate electrode; forming quantum dots on the TiO₂ patterned layer; forming a flexible counter electrode; assembling the substrate electrode having the quantum dots and the flexible counter electrode into a sandwich with a gasket between; and injecting electrolyte and sealant between the substrate electrode and flexible counter electrode to form a solar cell.

A device comprises a flexible substrate electrode having a patterned TiO₂ layer including quantum dots; a flexible counter electrode; a gasket disposed between the flexible substrate electrode and the flexible counter electrode; and an electrolyte and sealer injected between the flexible substrate electrode and the flexible counter electrode. The device is useful for preparing solar cells.

### Brief Description of the Drawings

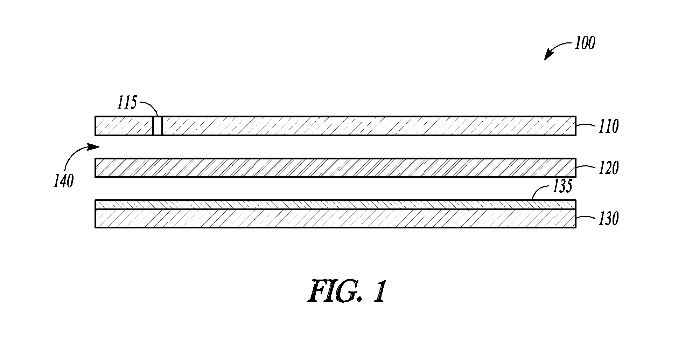

FIG. 1 is a block diagram illustrating a flexible solar cell according to an example embodiment.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical, and electrical changes may be made without departing from the scope of the present invention. The following description of example embodiments is, therefore, not to be taken in a limited sense, and the scope of the present invention is defined by the appended claims.

Lightweight and flexible solar cells may provide advantages for transportation and photovoltaic power-supply systems equipment. New designs and applications for supplying mobile electricity for lap-top computers, mobile phones, watches, etc. are possible. Moreover, replacing a rigid substrate by a flexible material allows a low-cost fabrication by roll-to-roll mass production. Therefore, by applying flexible-device technologies the formation of solar cells, there exists the possibility of preparing significantly lower cost photovoltaic-generating systems.

Dye sensitized flexible solar cells have been researched by many people, but there appear to be no reports about flexible quantum dot (QD) sensitized solar cells. Embodiments described herein include a package method for the flexible quantum dot sensitized solar cells.

Quantum dots are semiconductors whose conducting characteristics are closely related to the size and shape of the individual crystal. Generally, the smaller the size of the crystal, the larger the band gap, the greater the difference in energy between the highest valence band and the lowest conduction band becomes, therefore more energy is needed to excite the dot, and concurrently, more energy is released when the crystal returns to its resting state. For example, in fluorescent dye applications, this equates to higher frequencies of light emitted after excitation of the dot as the crystal size grows smaller, resulting in a color shift from red to blue in the light emitted. An advantage in using quantum dots is that because of the high level of control possible over the size of the crystals produced, it is possible to have very precise control over the conductive properties of the material. *(See,* < http://en.wikipedia.org/wiki/Quantum_dot > Accessed 09/26/2010).

Inorganic quantum dots (QDs) have potential advantages over molecular dyes:
(1) They are capable of facile tuning of effective band gaps down to the infra-red (IR) region by changing their sizes and compositions,
(2) They have a higher stability and resistance toward oxygen and water over their molecular dye counterparts,
(3) They open up new possibilities for making multilayer or hybrid sensitizers; and
(4) They exhibit new phenomena such as multiple exciton generation and use of energy transfer-based charge collection as well as direct charge transfer schemes.

Examples of specific pairs of materials for forming quantum dots (QD) include but are not limited to MgO, MgS, MgSe, MgTe, CaO, CaS, CaSe, CaTe, SrO, SrS,SrSe, SrTe, BaO, BaS, BaSe, BaTe, ZnO, ZnS, ZnSe, ZnTe, CdO, CdS, CdSe, CdTe, HgO, HgS, HgSe, HgTe, Al₂O₃, Al₂S₃, Al₂Se₃, Al₂Te₃, Ga₂O₃, Ga₂S₃, Ga₂Se₃, Ga₂Te₃, In₂O₃, In₂S₃, In₂Se₃, In₂Te₃, SiO₂, GeO₂, SnO₂, SnS, SnSe, SnTe, PbO, PbO₂, PbS, PbSe, PbTe, AlN, AlP, AlAs, AlSb, GaN, GaP, GaAs, GaSb, InN, InP, InAs, and InSb.

In one embodiment, the solar cells include flexible electrodes, such as poly(ethylene terephthalate) coated with tin-doped indium oxide (PET-ITO) or poly(ethylene naphthalene) coated with tin-doped indium oxide (PEN-ITO) or flexible titanium metal or stainless steel. Such flexible electrodes present lower costs and technological advantages relative to glass-ITO electrodes, for example, lower weight, impact resistance and less form and shape limitations.

In some embodiments, the solar cell may include an electron conductor. The electron conductor may be an n-type electron conductor. The electron conductor may be metallic and/or semiconducting, such as TiO₂ or ZnO. In some embodiments, the electron conductor may be formed of titanium dioxide that has been sintered.

In some embodiments, the electron conductor may be an electrically conducting polymer such as a polymer that has been doped to be electrically conducting and/or to improve its electrical conductivity.

Deposition of nanoparticulate TiO₂ on PET-ITO is difficult at least due to having to limit thermal treatments to 150°C, resulting in decreased adhesion, and decreased electrical contact between the particles and adsorption of the dye or quantum dot. This affects the efficiency of the solar cell. In one embodiment, a TiO₂ paste with an acid additive is used to enable low temperature annealing. In embodiments wherein the substrate is a flexible metal such as titanium, the TiO₂ sintering temperature can be may be greater than 150°C, to further improve the TiO₂ adhesion to the substrate.

In further embodiments, in-situ synthesis of quantum dots onto the TiO₂ film is used. There are two methods: chemical bath deposition and dip coating. Both methods utilize a suitable bandgap semiconductor, for example CdSe.

The flexible device is assembled with a flexible counter electrode and sealant. In one embodiment, transparent flexible PET-ITO electrodes (125 um thick, 10-100 ohm/sq, ∼79% transmission@550nm) are used as substrates for the photoelectrode. In another embodiment a flexible metal such as titanium or stainless steel may be used as the substrate. In such embodiments, the substrate would be non-transparent and the solar cell would be illuminated through the transparent flexible counter electrode.

Transparent counter electrodes (CE) may be prepared by sputter depositing a thin metal film such as a platinum film on a plastic substrate, making a pinhole at the counter electrodes. Counter electrodes may also be prepared by electrochemical deposition from chloroplatinic acid solution.

For preparation of photoelectrodes, a small aliquot of TiO₂ suspension (with acid additive, for low temperature annealing) may be spread onto the transparent electrodes using a glass rod with adhesive tape (such as 3M® brand adhesive tape) as a spacer. After that, the electrodes are heated at 120°C for 20 minutes on a hotplate.

CdSe quantum dots are then deposited on TiO₂ by chemical deposition. The deposition solution may be prepared by adding 0.7M potassium nitrilotriacetate [N(CH₂COOK)₃ or NTA] to 0.5M CdSO₄. Then 0.2M sodium selenosulfate (Na₂SeSO₃) in excess Na₂SO₃, prepared by stirring 0.2M Se with 0.5M Na₂SO₃ at 70° for 3-5 hr, was added, resulting in a final composition of 80 mM CdSO₄, 80mM Na₂SeSO₃ (which includes 0.12M free Na₂SO₃), and 120 mM NTA. During the deposition, the TiO₂ film is placed in the solution, which was put in a thermostat chamber to control temperature at 10-50°C for several hours and kept in the dark. Afterwards the samples were rinsed with water and dried in a N₂ flow.

The device is then assembled into a flexible sandwich type cell by pressing the counter electrode against the sensitized electrodes coated with quantum dots. Between the two electrodes, there is an adhesive tape, that is to say, sealed with a hotmelt gasket of 60 um thickness made of the ionomer Surlyn (DuPont). The heating temperature is about 100°C for 10 minutes. This is to control electrolyte film thickness and to avoid short-circuiting of the cell. The active area of the cells may be determined by the area of the hotmelt gasket. Surlyn® is a random copolymer poly(ethylene-co-methacrylic acid) (EMAA) in which the methacrylic acid groups have been neutralized with sodium ions (Na⁺).

The electrolyte and sealant are then injected through the pinhole. In one embodiment the electrolyte comprises a solution of a sulfide salt, sulfur, and an ionic conductor in in a mixture of water and an alcohol. A typical electrolyte solution comprises a solution of 1M Na₂S, 0.1M S, 0.2M KCl, in a mixture of pure water and methanol (volume ratio:1:1). A drop of the electrolyte put on the hole in the back of the counter electrode. The electrolyte is introduced into the cell via vacuum backfilling. The hole may be sealed with a Surlyn layer. In an embodiment, the gasket has two or more holes. The electrolyte is introduced through one hole and allowed to flow through the cell until electrolyte begins to flow out the other hole(s). The holes may then be sealed with a Surlyn layer.

FIG. 1 is an expanded block cross section diagram of a flexible solar cell 100 formed in the above manner. A top counter electrode flexible layer 110 is shown with a hole 115. Gasket 120 is shown between the top counter electrode flexible layer 110 and a bottom substrate photoelectrode that includes patterned TiO₂ layer 135 with quantum dots. Finally, electrolyte and sealer are represented at 140, and may be injected through hole 115 in one embodiment.

The invention has been described in detail with particular reference to certain preferred embodiments thereof, but it will be understood that variations and modifications can be effected within the scope of the invention.

## Claims

1. A method comprising:
forming a TiO₂ patterned layer on a flexible substrate electrode;
forming quantum dots on the TiO₂ patterned layer;
forming a flexible counter electrode;
assembling the substrate electrode having the quantum dots and the flexible counter electrode into a sandwich with a gasket between; and
injecting electrolyte and sealant between the substrate electrode and flexible counter electrode to form a solar cell.

2. The method of claim 1 wherein the quantum dots are deposited on the patterned TiO₂ by chemical deposition.

3. The method of claim 1 wherein the flexible substrate electrode is formed of polyethylene terephthalate or polyethylene naphthalate coated with tin-doped indium oxide.

4. The method of claim 1 or 2 wherein the quantum dots are formed using in-situ synthesis onto the patterned TiO₂.

5. The method of claim 1 wherein the counter electrode includes a one or more pinholes through which a sealant is injected.

6. The method of claim 1 wherein the electrolyte includes a solution of 1M Na₂S, 0.1M S, 0.2M KC1, in a mixture of pure water and methanol.

7. The method of claims 1, 2, or 4 wherein the quantum dots are formed from MgO, MgS, MgSe, MgTe, CaO, CaS, CaSe, CaTe, SrO, SrS,SrSe, SrTe, BaO, BaS, BaSe, BaTe, ZnO, ZnS, ZnSe, ZnTe, CdO, CdS, CdSe, CdTe, HgO, HgS, HgSe, HgTe, Al₂O3, Al₂S₃, Al₂Se₃, Al₂Te₃, Ga₂O₃, Ga₂S₃, Ga₂Se₃, Ga₂Te₃, In₂O₃, In₂S₃, In₂Se₃, In₂Te₃, SiO₂, GeO₂, SnO₂, SnS, SnSe, SnTe, PbO, PbO₂, PbS, PbSe, PbTe, AlN, A1P, AlAs, AlSb, GaN, GaP, GaAs, GaSb, InN, InP, InAs, and InSb.

8. A device comprising:
a flexible substrate electrode having a patterned TiO₂ layer including quantum dots;
a flexible counter electrode;
a gasket disposed between the flexible substrate electrode and the flexible counter electrode; and
an electrolyte and sealer injected between the flexible substrate electrode and the flexible counter electrode.

9. The device of claim 8 wherein the flexible substrate electrode is formed of a flexible polymer coated with tin-doped indium oxide.

10. The device of claim 8 or 9 wherein the quantum dots are formed from MgO, MgS, MgSe, MgTe, CaO, CaS, CaSe, CaTe, SrO, SrS,SrSe, SrTe, BaO, BaS, BaSe, BaTe, ZnO, ZnS, ZnSe, ZnTe, CdO, CdS, CdSe, CdTe, HgO, HgS, HgSe, HgTe, Al₂O₃, Al₂S₃, Al₂Se₃, Al₂Te₃, Ga₂O₃, Ga₂S₃, Ga₂Se₃, Ga₂Te₃, In₂O₃, ln₂S₃, In₂Se₃, In₂Te₃, SiO₂, GeO₂, SnO₂, SnS, SnSe, SnTe, PbO, PbO₂, PbS, PbSe, PbTe, A1N, A1P, AlAs, AlSb, GaN, GaP, GaAs, GaSb, InN, InP, InAs, and InSb.
